(19) Europäisches Patentamt
European Patent Office
Office européen des brevets

(11) **EP 2 103 951 A2**

(12) **EUROPEAN PATENT APPLICATION**

(43) Date of publication:
**23.09.2009  Bulletin 2009/39**

(51) Int Cl.:
*G01R 31/26* (2006.01)    *H01L 31/042* (2006.01)

(21) Application number: **08166601.8**

(22) Date of filing: **14.10.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **19.03.2008  IT MI20080463**

(71) Applicant: **UNAOHM Technology S.r.l.**
**20068 Peschiera Borromeo (MI) (IT)**

(72) Inventors:
• **Quaini, Giuliano**
  **20024 Milano (MI) (IT)**
• **Bettani, Marco**
  **24050 Bariano (BG) (IT)**
• **Spelta, Paolo**
  **20026 Novate Milanese (MI) (IT)**

(74) Representative: **De Ros, Alberto**
**AlbertoDeRos**
**Industrial Property Counsellor**
**Via Michelangelo 53**
**I-22071 Cadorago (CO) (IT)**

(54) **Measurement instrument for photovoltaic systems**

(57)    The present invention relates to a measuring instrument for a photovoltaic system; the system is of the type comprising at least one photovoltaic module (FM1; FM2) and at least one conversion module (CM1; CM2) connected to the output of the photovoltaic module (FM1; FM2); the instrument comprises first measuring means (MM1, MM3) adapted to be connected to the photovoltaic module (FM1; FM2) and to determine electric generation efficiency values, as well as second measuring means (MM1, MM2) adapted to be connected to the conversion module (CM1; CM2) and to determine electric conversion efficiency values.

Fig.3

**Description**

The present invention relates to a measuring instrument for photovoltaic systems.

Photovoltaic systems, the function of which is to generate electric energy by direct conversion of solar irradiation, are becoming increasingly widespread.

However, manufacturing and installation techniques thereof have not been consolidated yet.

This is especially true as regards the measuring instruments to be used for verifying the operation of the installed systems.

The general object of the present invention is to provide a measuring instrument specifically conceived for photovoltaic systems.

A more specific object of the present invention is to provide a measuring instrument which is easy and comfortable to use for installers.

These and other objects are achieved through the instrument having the features set out in the appended claims, which are intended as an integral part of the present description.

The instrument according to the present invention serves to carry out measurements on photovoltaic systems of the type comprising at least one photovoltaic module and at least one conversion module connected to the output of said photovoltaic module; in general, the instrument according to the present invention comprises first measuring means adapted to be connected to said photovoltaic module and to determine electric generation efficiency values, as well as second measuring means adapted to be connected to said conversion module and to determine electric conversion efficiency values.

When said photovoltaic system is of the type comprising connection means adapted to electrically connect said photovoltaic module to said conversion module, the instrument according to the present invention may comprise third measuring means adapted to be connected to said connection means and to determine electric transport efficiency values.

Said third measuring means may be adapted to operate at different times under the command of a user, and may be adapted to store the determined efficiency values.

The instrument according to the present invention may be adapted to determine several values relating to the same efficiency parameter of the photovoltaic system and to calculate an average of said values.

The instrument according to the present invention may be adapted to determine an overall efficiency value as a product of an electric generation efficiency value and an electric conversion efficiency value.

The instrument according to the present invention may be adapted to determine an overall efficiency value as a product of an electric generation efficiency value and an electric conversion efficiency value and an electric transport efficiency value.

The instrument according to the present invention may be adapted to receive a measuring session start command and a measuring session stop command, in particular from a user.

The instrument according to the present invention may be adapted to display and/or print and/or transfer the results of a measuring session.

The instrument according to the present invention may be adapted to store one or more threshold values for one or more corresponding efficiency parameters of the photovoltaic system, and to compare one or more determined efficiency values with said one or more corresponding threshold values. Said one or more threshold values may be stored during the instrument manufacturing stage or by a user of said instrument. The instrument according to the present invention may be adapted to display and/or print and/or transfer the result of said comparison.

The instrument according to the present invention may be adapted to store one or more values of characteristic parameters of the photovoltaic system to be measured by interacting with a user of said instrument.

The instrument according to the present invention may be adapted to carry out measurements simultaneously on a predetermined number of conversion modules, in particular on three modules.

The instrument according to the present invention may be adapted to carry out measurements through one or more remote probes. Said remote probe may be adapted to transmit the value of the measured quantity through a wireless technology or a wired technology, in particular serial and more in particular PLC.

The instrument according to the present invention may comprise an electronic processing unit and at least one electronic measuring module connected to said unit.

The instrument according to the present invention may comprise a first module for direct current measurements and/or a second module for alternating current measurements and/or a third module for temperature and/or irradiation measurements.

Said first module may comprise at least one probe for direct current measurements and at least one probe for direct voltage measurements and at least one analog-to-digital converter circuit, in particular one converter circuit for each probe.

Said second module may comprise at least one probe for alternating current measurements and at least one probe for alternating voltage measurements and at least one analog-to-digital converter circuit, in particular one converter circuit for each probe. Said second module may further comprise a circuitry for determining the phase difference between alternating current and alternating voltage.

Said probes for voltage measurements may be associated with optical insulators.

Said third module may comprise an irradiation meter, a first thermometer for ambient temperature measurements, a second thermometer for photovoltaic panel temperature measurements, and an analog-to-digital converter circuit, in particular only one converter.

Said electronic processing unit may be adapted to request two electronic measuring modules to carry out measurements either sequentially or simultaneously, and then to read the measurements carried out by the modules.

Said electronic measuring modules may be connected to the electronic processing unit through a single serial bus.

Said electronic processing unit may comprise non-volatile memory means, in particular EEPROM type, adapted to store, in particular, rated values of parameters of a photovoltaic system, values of measurements carried out, and values of determined parameters.

The instrument according to the present invention may comprise a display.

The instrument according to the present invention may comprise a keyboard.

The instrument according to the present invention may comprise a communication port for connecting to an external printer.

The instrument according to the present invention may comprise a serial communication port (e.g. RS-232, RS-422, RS-485).

The instrument according to the present invention may comprise a USB port.

The instrument according to the present invention may comprise a "data logger" system.

The instrument according to the present invention may be powered through both an external electric network and an internal battery.

The present invention will become more apparent from the following description and from the annexed drawings, wherein:

Fig.1 shows a first example of a photovoltaic system,
Fig.2 shows a second example of a photovoltaic system, and
Fig.3 is a block diagram relating to a measuring instrument according to an example of embodiment of the present invention.

Said description and said drawings are to be considered as non-limiting and exemplifying only; additionally, they are schematic and simplified.

The instrument according to the present invention serves to carry out measurements on photovoltaic systems of the type comprising at least one photovoltaic module and at least one conversion module connected to the output of said photovoltaic module.

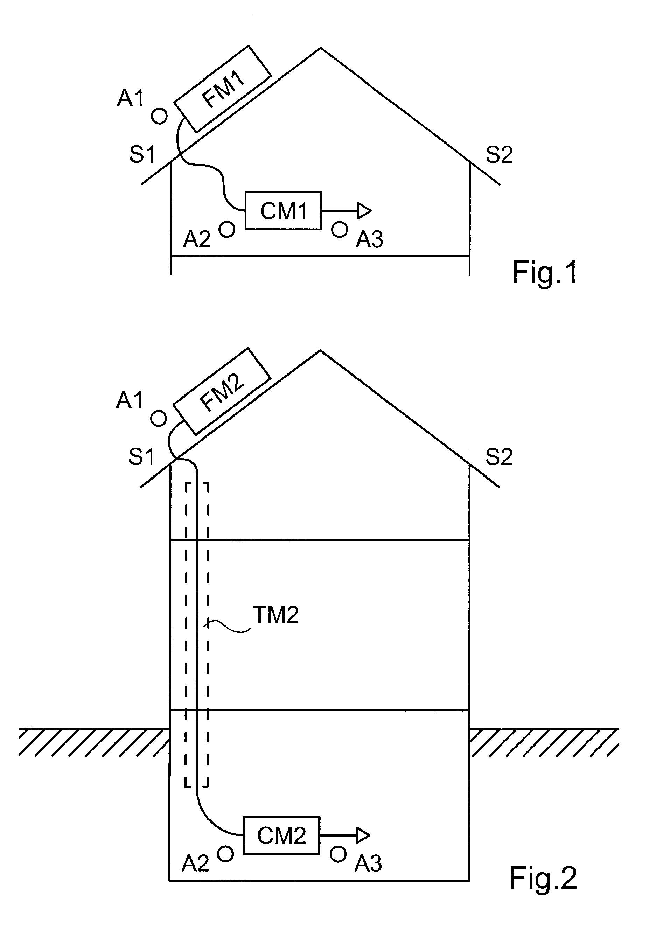

A system of this type is shown in Fig.1, where FM1 designates a photovoltaic module and CM1 designates a conversion module; the module FM1 outputs electric power (through photovoltaic effect) having, for example, a direct voltage of a few hundreds of Volts; said power is transferred to the module CM1 through two short electric leads (the module FM1 of Fig.1 is installed on the roof, while the module CM1 of Fig.1 is placed in the loft, right beneath the roof); the module CM1 converts the direct current into alternating current and outputs electric power having, for example, an alternating voltage of about 230 VAC and 50 Hz.

In the example of Fig.1, the system comprises only one photovoltaic module installed on a first side S1 of the roof (e.g. a side facing EAST); in addition, a second photovoltaic module may be installed on a second side S2 of the roof (e.g. a side facing WEST); finally, a third photovoltaic module may be installed on a third side of the roof (e.g. a side facing SOUTH); the instrument according to the present invention is also applicable to systems with two or three photovoltaic modules.

In a photovoltaic system, the electric connection between the photovoltaic module and the conversion module may be quite long (e.g. 20-200m), as is the case of the system of Fig.2, wherein connection means TM2 (provided as two long electric leads) are used for the electric connection between the photovoltaic module FM2 (installed on the roof) and the conversion module CM2 (installed in the basement). In this case, the connection means may be subject to electric measurements as well.

In order to verify the operation of photovoltaic systems like those shown by way of example in Fig.1 and Fig.2, the installer can measure several simple physical quantities.

In the point or area A1, one can measure irradiation, ambient temperature, photovoltaic panel temperature, photovoltaic module output direct voltage, and photovoltaic module output direct current.

In the point or area A2, one can measure conversion module input direct voltage and conversion module input direct current.

In the point or area A3, one can measure conversion module output alternating voltage and conversion module output alternating current.

Furthermore, still for verifying the operation of photovoltaic systems, the installer can measure several composite quantities, such as "electric generation efficiency" (hereafter referred to as R1), "electric conversion efficiency" (hereafter referred to as R2), "electric transport efficiency" (hereafter referred to as R3), and "overall efficiency" (hereafter referred to as R4).

The "electric generation efficiency" can be defined as follows:

$$R1 = Pcc(FT) / (Pnom \times I/Istc)$$

where:

- Pcc(FT) is the direct current power measured at the output of the photovoltaic generator module (at point A1 in Fig. 1 and Fig.2), in particular with an accuracy higher than $\pm$ 2%;

- Pnom is the rated power of the photovoltaic generator module;

- I is the irradiation [W/m$^2$] measured on the irradiated plane of the photovoltaic devices (or photovoltaic cells) that make up the photovoltaic generator module, in particular with an accuracy higher than $\pm$ 3%;

- Istc, equal to 1,000 W/m$^2$, is the irradiation in standard test conditions; this condition must be verified, for example for I > 600 W/m$^2$.

The "electric conversion efficiency" can be defined as follows:

$$R2 = Pca / Pcc(CC)$$

where:

- Pca is the active alternating current power measured at the output of the converter module (at point A3 in Fig.1 and Fig.2), in particular with an accuracy higher than $\pm$ 2%;

- Pcc(CC) is the direct current power measured at the input of the converter module (at point A2 in Fig.1 and Fig.2), in particular with an accuracy higher than $\pm$ 2%.

The "electric transport efficiency" can be defined as follows:

$$R3 = Pcc(CC) / Pcc\ (FT)$$

where:

- Pcc(CC) is the direct current power measured at the input of the converter module (at point A2 in Fig.1 and Fig.2), in particular with an accuracy higher than $\pm$ 2%;

- Pcc(FT) is the direct current power measured at the output of the photovoltaic generator module (at point A1 in Fig. 1 and Fig.2), in particular with an accuracy higher than $\pm$ 2%.

The "overall efficiency" can be generally defined as follows:

$$R4 = R1 \times R2 \times R3$$

However, assuming that there are no losses in the means that transports the electric energy from the photovoltaic generator module to the conversion module (i.e. if R3 = 1), the "overall efficiency" can be defined simply as R4 = R1 × R2 .

Finally, still for verifying the operation of photovoltaic systems, the installer may also carry out additional verifications of an even higher level, typically for checking that the system meets predetermined criteria; for example:

$$R1 > 0.85$$

$$R2 > 0.90$$

$$R3 > 0.98$$

$$R4 > 0.75$$

In the above example, these verifications involve comparing photovoltaic system efficiency parameters with predetermined fixed numerical values; it may however be appropriate to employ variable numerical values, as explained below.

If, when measuring the "electric generation efficiency", an operating temperature of the photovoltaic generator module higher than 40 °C is detected (measured on the rear face of the module, i.e. the non-irradiated face), it will be advantageous to compare the parameter R1 with the following value:

$$1 - Ptpv - 0.08$$

where:

- Ptpv indicates the thermal losses of the photovoltaic generator module (this information is supplied by the manufacturer and can be obtained from the data sheets of the module itself), whereas all other generator losses (optical and resistive losses, drop at internal diodes, coupling defects) are typically assumed to be equal to 8%.

Given the photovoltaic cell temperature Tcel, the thermal losses Ptpv of the photovoltaic generator module can be determined as follows:

$$Ptpv = (Tcel - 25) \times \gamma / 100$$

or, given the ambient temperature Tamb, as follows:

$$Ptpv = [Tamb - 25 + (NOCT - 20) \times I / 800] \times \gamma / 100$$

where:

- $\gamma$ is the power temperature coefficient (this information is supplied by the manufacturer and can be obtained from the data sheets of the module itself - it is typically $0.4 \div 0.5$ %/°C for photovoltaic cells made of crystalline silicon);

- NOCT is the rated operating temperature of the photovoltaic cell (this information is supplied by the manufacturer and can be obtained from the data sheets of the photovoltaic generator module - it is typically $40 \div 50$°C, but may reach 60 °C for backchamber modules);

- Tamb is the ambient temperature; for systems wherein one face of the module is exposed to the outside environment and the other face of the module is exposed to the inside of a building (as in roof skylights), the temperature to be considered is typically the average of the two;

- Tcel is the temperature of the photovoltaic cells of the photovoltaic module; it can be measured through a resistive sensor applied to the rear of the module.

As can be understood from the above, some of these measurements and verifications depend on rated values of parameters of the photovoltaic system, e.g. Ptpv , $\gamma$, NOCT .

The results of these measurements and verifications may be recorded manually by the installer in a notebook or stored automatically in the instrument according to the present invention, e.g. for being subsequently read and/or used.

Moreover, the installer may want to give his customer a written report, so as to prove that the photovoltaic module has been installed properly.

The measuring instrument according to the present invention is designed to allow and facilitate composite quantity measurements and possibly also high-level verifications; it may additionally make it easier to prepare written reports for the customers.

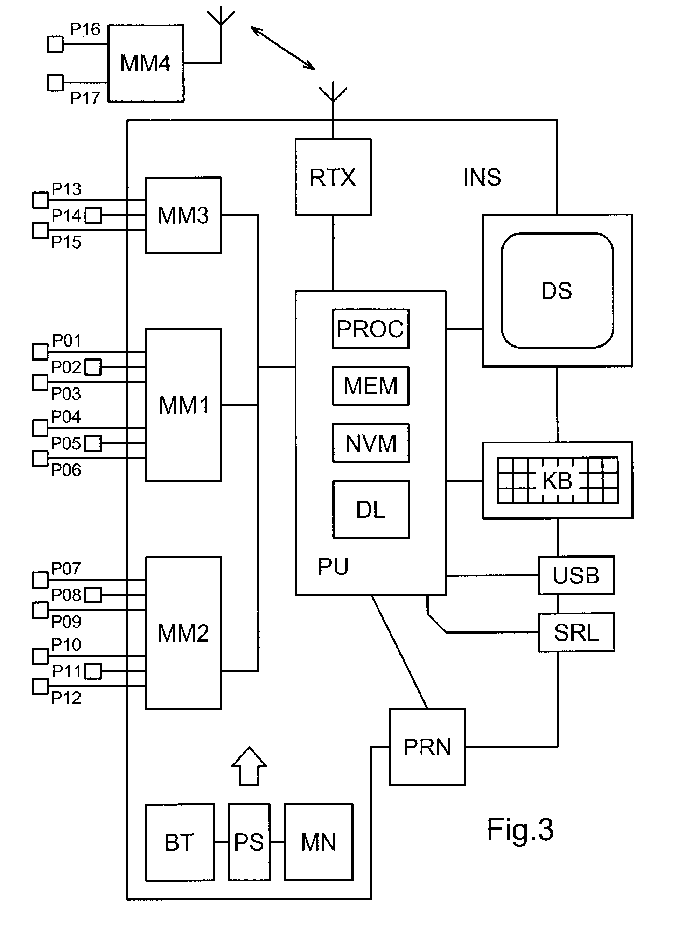

Fig.3 shows a block diagram of a measuring instrument INS according to an example of embodiment of the present invention.

The instrument INS comprises an electronic processing unit PU and four electronic measuring modules MM1, MM2, MM3, MM4 connected to the unit PU; the modules MM1, MM2 and MM3 are contained within the housing of the instrument INS, whereas the module MM4 is external to the housing of the instrument INS.

The module MM1 is used for direct current measurements (in particular, power measurements); the module MM2 is used for alternating current measurements (in particular, power measurements); the module MM3 is used for temperature and irradiation measurements; the module MM4 is adapted to be placed in a location remote from the housing of the instrument INS (as clarified below) and is used in particular for direct current measurements (in particular, power measurements).

The electronic measuring modules MM1, MM2, MM3 are connected to the electronic processing unit PU through a single serial bus within the housing of the instrument INS.

The electronic measuring module MM4 is connected to the electronic processing unit PU by means of a "wireless" technology (e.g. Bluetooth or ZigBee or Wi-Fi); Fig.3 highlights a transceiver unit RTX connected to the unit PU that provides bidirectional communication between the unit MM4 and the unit PU. A "wired" technology, in particular the PLC [Power Line Communication] technology, may be used as an alternative as well as the electric leads connecting the photovoltaic module (FM1 in Fig.1 and FM2 in Fig.2) of the photovoltaic system to the conversion module (CM1 in Fig. 1 and CM2 in Fig.2) of the photovoltaic system.

The module MM1 comprises three probes P01, P03, P05 for direct current measurements and three probes P02, P04, P06 for direct voltage measurements and at least one analog-to-digital converter circuit, in particular one converter circuit for each probe (i.e. six converter circuits). In the embodiment example of Fig.3, the core of the module MM1 is the integrated circuit AD7656 by Analog Devices. Through direct voltage and direct current measurements, the unit PU can obtain direct power measurements (by multiplication); in particular, thanks to the six probes employed, it is possible to obtain three independent and simultaneous electric power measurements.

The module MM2 comprises three probes P07, P09, P11 for alternating current measurements and three probes P08, P10, P12 for alternating voltage measurements and at least one analog-to-digital converter circuit, in particular one converter circuit for each probe (i.e. six converter circuits). In the embodiment example of Fig.3, the core of the module MM2 is the integrated circuit ADE7758 by Analog Devices; said integrated circuit can directly provide the unit PU with energy and power measurements (in particular, active power measurements); said integrated circuit can carry out independent and simultaneous measurements on three distinct electric lines; thus, the instrument according to the present invention may also be used for photovoltaic systems adapted to output three-phase electric energy. With a simpler module MM2, the alternating power measurements should be obtained by the unit PU from the current and voltage measurements; in such a case, the module MM2 may advantageously comprise a circuitry for determining the phase difference between alternating current and alternating voltage.

The probes P02, P04, P06, P08, P10, P12 for voltage measurements are associated with optical insulators for the purpose of keeping the instrument INS galvanically insulated from the photovoltaic system to be measured; this is to ensure safety of use of the instrument.

The module MM3 comprises an irradiation meter P13, also called pyranometer, a first thermometer P14 for ambient temperature measurements, a second thermometer P15 for photovoltaic panel temperature measurements, and an analog-to-digital converter circuit, in particular only one converter. In the embodiment example of Fig.3, the core of the module MM3 is the integrated circuit AD7795 by Analog Devices.

The module MM4 comprises a probe P16 for direct current measurements and a probe P17 for direct voltage measurements, an analog-to-digital converter circuit, and a transceiver unit similar to the unit RTX (which is located within the housing of the instrument INS) and adapted to communicate with the latter, in particular to receive therefrom measurement commands and to transmit thereto results of measurements carried out. Through direct voltage and direct current measurements, the unit PU can obtain direct power measurements (by multiplication).

According to a variant of the embodiment example of Fig.3, the transceiver unit associated with the module MM4 may be external to the module and the transceiver unit associated with the instrument INS may be external to the instrument; said transceiver units may consist of modems for "wireless" communication (e.g. GSM modems) or for "wired" communication; in this latter case, the connections between the module and the respective transceiver unit and between the instrument and the respective transceiver unit may be of a serial type, e.g. USB. It should be noted that, instead of using an entire remote measuring module with respective probes and converter (as in the example of Fig.3), a simpler setup may alternatively employ remote probes in communication with the instrument INS, in particular communicating with the electronic processing unit PU either directly or indirectly through an internal measuring module; as far as communication is concerned, it may be provided by using either "wireless" or "wired" technology.

As can be understood from the above, each of the "electric generation efficiency", "electric conversion efficiency" and "electric transport efficiency" measurements typically requires the use of two electronic measuring modules; the "electric generation efficiency" measurement requires the modules MM1 and MM3; the "electric conversion efficiency" measurement requires the modules MM1 and MM2; the "electric transport efficiency" measurement requires the modules MM1 and MM4. Therefore, the electronic processing unit PU is adapted to request two electronic measuring modules to carry out measurements either sequentially or simultaneously, and then to read the measurements carried out by the modules.

The electronic processing unit PU comprises a processor PROC and a memory MEM for programs and data; it also comprises a non-volatile memory NVM, in particular EEPROM type; said memory NVM is adapted to store, among other things, rated values of parameters of a photovoltaic system (which are necessary for some measurements and verifications), values of measurements carried out and parameter values determined on the basis of calculations made by the processor PROC.

The "overall efficiency" measurement requires that the "electric generation efficiency", "electric conversion efficiency" and "electric transport efficiency" measurements have been carried out beforehand and stored.

The verifications pertaining to "electric generation efficiency", "electric conversion efficiency", "electric transport efficiency" and "overall efficiency" require further processing by the processor PROC.

The instrument INS comprises a display DS, in particular a monochromatic or colour liquid crystal display, connected to the unit PU and adapted to display, among other things, the results of the measurements and verifications carried out.

The instrument INS comprises a keyboard KB connected to the unit PU and adapted to receive, among other things, user's commands about the measurements and verifications to be carried out as well as rated values of parameters of a photovoltaic system (required for some measurements and verifications).

The instrument INS comprises a communication port PRN connected to the unit PU for connecting to an external printer; in fact, it may be useful to print the results of the measurements and verifications carried out and/or a report about a newly installed system. It is also conceivable to integrate a small printer into the instrument; the obtained print-out would however be too small and unsuitable as an actual report to be delivered to the Customer.

The instrument INS comprises a serial communication port SRL (e.g. RS-232, RS-422, RS-485) and a USB port USB, both connected to the unit PU; these ports may be used, for example, for communicating with external apparatuses. The instrument INS may then be completed with a port for connecting to a LAN network, in particular an Ethernet port.

One component which may turn out to be very useful is the "data logger", i.e. a device that records the activity of the instrument INS for a long period of time, e.g. one week or one month or one year; in Fig.3, this device is referred to as DL and is contained in the unit PU.

The instrument INS comprises a power supply PS with a section MN adapted to be connected to an external electric network and a section BT adapted to be connected to a battery contained in the instrument housing.

The instrument INS having the structure described above with reference to Fig.3 (or a similar instrument) allows to carry out all the aforementioned measurements and verifications on a photovoltaic system. It also allows to carry out measurements and verifications on more complex systems than those shown in Fig.1 and Fig.2; in fact, when a photovoltaic system comprises three photovoltaic modules, the latter can be connected to a three-phase converter module, and the above-described instrument INS can thus be used perfectly.

A first important peculiarity of the above-described instrument INS is its ability to carry out several measurements simultaneously or substantially simultaneously (e.g. direct and alternating power measurements); therefore, the efficiency parameters can be measured in a very accurate manner. The remote measuring module MM4 and the local measuring module MM1 serve, for example, to carry out simultaneous direct electric power measurements at the opposite (and distant) ends of the connection means TM2 (see Fig.2); a less accurate alternative would be to carry out the measurements at points A1 and A2 at different times (after a few minutes, i.e. the time necessary for the installer to move from point A1 to point A2).

A second important peculiarity of the above-described instrument INS is its ability to allow and facilitate measurements of composite quantities and high-level verifications.

A third important peculiarity of the above-described instrument INS is its ability to automatically store internally the completed measurements and verifications for later reading and/or use.

A fourth important peculiarity of the above-described instrument INS is its ability to allow and facilitate the preparation and printing of installation reports to be delivered to the customers.

Thanks to the processor-type electronic processing unit PU, the operation of the instrument INS can be made very flexible; for instance, the measuring modules may be adapted to operate at different times under the command of a user.

The instrument INS may be adapted to determine one or more values relating to the same efficiency parameter of the photovoltaic system and to calculate an average of said values.

It is conceivable that the instrument INS is adapted to receive a measuring session start command and a measuring session stop command, in particular from a user; at the end of the measuring session, the measurements and/or verifications, i.e. the results of the measuring session, may be displayed and/or printed and/or transferred to another apparatus external to the instrument housing.

Furthermore, it is conceivable that the instrument INS stores internally one or more threshold values for one or more corresponding efficiency parameters of the photovoltaic system, and compares one or more determined efficiency values with said one or more corresponding threshold values; the outcome of these comparisons may be, for example, a confirmation that the photovoltaic system has been installed properly and operates properly. Said threshold values are preferably stored during the instrument manufacturing stage, or else by a user of the instrument. In this case as well, the results of said comparisons may be displayed and/or printed and/or transferred to another apparatus external to the instrument housing.

Finally, it is conceivable that the instrument INS stores (e.g. into its non-volatile memory NVM) one or more values of parameters characteristic of the photovoltaic system to be measured by interacting with a user of the instrument through the keyboard KB; as an alternative, this data may be read from a memory device connected, for example, to the port USB.

An important aspect of the present invention is the remote measuring unit (which in the example of Fig.3 was the module MM4); in fact, as explained above, a photovoltaic system requires measurements to be carried out at different locations which may be quite distant from one another (as well as not very accessible), while it is also necessary that such measurements are carried out substantially at the same time.

In order to solve this problem, the Applicant has conceived an instrument equipped with a remote measuring unit with which it is adapted to communicate; this communication may be provided by using either "wireless" or "wired" technology. This allows measurements to be carried out simultaneously at different points near and far from the instrument.

The remote measuring unit may be adapted to measure electric quantities and/or thermal quantities (in particular temperature) and/or optical quantities (in particular irradiation), preferably all three of them.

Referring for example to the system of Fig.2, if the user wants to carry out all necessary measurements while staying in the basement together with the measuring instrument, the user will place the remote measuring unit in the area A1 and will measure irradiation, ambient temperature, photovoltaic panel temperature, photovoltaic module output direct voltage and photovoltaic module output direct current through said unit.

The remote measuring unit may be used not only when installing and testing the photovoltaic system, but also for monitoring the photovoltaic system.

If in the area A1 (see Fig. 1 and Fig.2) there is a remote measuring unit capable of measuring irradiation, ambient temperature, photovoltaic panel temperature, photovoltaic module output direct voltage and photovoltaic module output direct current, it will be possible to monitor the operation of the roof-mounted photovoltaic module (in particular the electric generation efficiency thereof) while staying inside the building or even from a great distance (e.g. from a remote assistance laboratory).

In such a case, the remote measuring unit for photovoltaic systems is an apparatus which can be manufactured, sold and installed separately from the measuring instrument.

**Claims**

1. Measuring instrument for a photovoltaic system, said system being of the type comprising at least one photovoltaic module (FM1; FM2) and at least one conversion module (CM1; CM2) connected to the output of said photovoltaic module (FM1; FM2), **characterized by** comprising first measuring means (MM1, MM3) adapted to be connected to said photovoltaic module (FM1; FM2) and to determine electric generation efficiency values, and second measuring means (MM1, MM2) adapted to be connected to said conversion module (CM1; CM2) and to determine electric conversion efficiency values.

2. Instrument according to claim 1, wherein said photovoltaic system is of the type comprising connection means (TM2) adapted to electrically connect said photovoltaic module (FM2) to said conversion module (CM2), **characterized by** comprising third measuring means (MM2; MM4) adapted to be connected to said connection means (TM2) and to determine electric transport efficiency values.

3. Instrument according to claim 2, wherein said third measuring means (MM2) are adapted to operate at different times under the command of a user and to store the determined efficiency values.

4. Instrument according to claim 1 or 2 or 3, **characterized by** being adapted to determine several values relating to the same efficiency parameter of the photovoltaic system and to calculate an average of said values.

5. Instrument according to any of the preceding claims, **characterized by** being adapted to determine an overall efficiency value as a product of an electric generation efficiency value and an electric conversion efficiency value.

6. Instrument according to claim 5, **characterized by** being adapted to determine an overall efficiency value as a product of an electric generation efficiency value and an electric conversion efficiency value and an electric transport efficiency value.

7. Instrument according to any of the preceding claims, **characterized by** being adapted to receive a measuring session start command and a measuring session stop command, in particular from a user.

8. Instrument according to any of the preceding claims, **characterized by** being adapted to display (DS) and/or print (PRN) and/or transfer (USB, SRL) the results of a measuring session.

9. Instrument according to any of the preceding claims, **characterized by** being adapted to store one or more threshold values for one or more corresponding efficiency parameters of the photovoltaic system, and to compare one or more determined efficiency values with said one or more corresponding threshold values.

10. Instrument according to claim 9, wherein said one or more threshold values are stored during the instrument manufacturing stage or by a user of said instrument.

11. Instrument according to claim 9 or 10, **characterized by** being adapted to display (DS) and/or print (PRN) and/or transfer (USB, SRL) the outcome of said comparison.

12. Instrument according to any of the preceding claims, **characterized by** being adapted to store (KB, MEM; KB, NVM) one or more values of characteristic parameters of the photovoltaic system to be measured by interacting with a user of said instrument.

13. Instrument according to any of the preceding claims, **characterized by** being adapted to carry out measurements simultaneously on a predetermined number of conversion modules, in particular on three modules.

14. Instrument, in particular according to any of the preceding claims, **characterized by** being adapted to carry out measurements through one or more remote probes (MM4, P16, P17).

15. Instrument according to claim 14, wherein said remote probe is adapted to transmit the value of the measured quantity through a wireless technology or a wired technology, in particular serial, more in particular PLC.

A1

FM1

S1

S2

CM1

A2

A3

Fig.1

A1

FM2

S1

S2

TM2

A2

CM2

A3

Fig.2

Fig.3